# EUROPÄISCHE PATENTSCHRIFT

(11) **EP 2 903 784 B1**
(45) Veröffentlichungstag und Bekanntmachung des Hinweises auf die Patenterteilung: **23.06.2021**
(21) Anmeldenummer: 13779166.1
(22) Anmeldetag: 08.10.2013
(51) Int. Cl.: B25B 21/00

(54) **HANDWERKZEUGMASCHINE**
HAND-HELD MACHINE TOOL
OUTIL ÉLECTROPORTATIF

(30) Priorität: 08.10.2012 DE 102012218277; 08.10.2012 DE 102012218279
(43) Veröffentlichungstag der Anmeldung: 12.08.2015
(73) Patentinhaber: Robert Bosch GmbH, 70442 Stuttgart (DE)
(72) Erfinder: WELLER, Thomas, 70771 Leinfelden-Echterdingen (DE)
(86) Internationale Anmeldenummer: PCT/EP2013/070935
(87) Internationale Veröffentlichungsnummer: WO 2014/056905

(56) Entgegenhaltungen:
- EP-A1- 0 591 574
- WO-A1-2012/110485
- DE-A1-102007 019 434
- US-A1- 2007 144 753
- None

## Beschreibung

### Stand der Technik

Es ist bereits eine Handwerkzeugmaschine, insbesondere ein Handwerkzeugschrauber, mit einer Werkzeugaufnahme, mit einer Antriebsspindel, mit zumindest einer aktiven Antriebseinheit, zum Antrieb der Werkzeugaufnahme über die Antriebsspindel, vorgeschlagen worden. Derartige Handwerkzeugmaschinen sind beispielsweise aus DE 10 2007 019 434 A1, US 2007/144753 A1 und EP 0 591 574 A1 bekannt.

### Offenbarung der Erfindung

Die Erfindung geht aus von einer Handwerkzeugmaschine, insbesondere von einem Handwerkzeugschrauber, mit einer Werkzeugaufnahme, mit einer Antriebsspindel, mit zumindest einer aktiven Antriebseinheit, zum Antrieb der Werkzeugaufnahme über die Antriebsspindel.

Es wird eine Handwerkzeugmaschine mit den Merkmalen des Anspruchs 1 vorgeschlagen, bei der die Werkzeugaufnahme und die Antriebsspindel getrennt voneinander ausgebildet und in Umfangsrichtung über eine Formschlussverbindung verbunden sind. Unter einer "Handwerkzeugmaschine" soll in diesem Zusammenhang insbesondere eine werkstückbearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug, verstanden werden. Vorzugsweise soll darunter insbesondere eine tragbare Werkzeugmaschine verstanden werden, die von einem Bediener transportmaschinenlos transportiert werden kann. Besonders bevorzugt weist die Handwerkzeugmaschine insbesondere eine Masse auf, die kleiner ist als 40 kg, bevorzugt kleiner ist als 10 kg und besonders bevorzugt kleiner ist als 5 kg. Ferner soll in diesem Zusammenhang unter einer "Werkzeugaufnahme" insbesondere ein Element der Handwerkzeugmaschine verstanden werden, das dazu vorgesehen ist, ein Einsatzwerkzeug von einem Bediener lösbar zumindest drehfest direkt zu befestigen. Vorzugsweise soll darunter insbesondere ein Element mit einem Aufnahmebereich verstanden werden, der zumindest eine Kontur, insbesondere eine Sechskantkontur, zur drehfesten Befestigung eines Einsatzwerkzeugs aufweist. Besonders bevorzugt weist die Werkzeugaufnahme einen magnetischen Bithalter auf. Unter einer "Antriebsspindel" soll in diesem Zusammenhang insbesondere eine mechanische Welle verstanden werden, die dazu vorgesehen ist, direkt oder indirekt von einer Antriebseinheit, insbesondere von einer Motoreinheit, angetrieben zu werden. Vorzugsweise soll darunter insbesondere eine Welle verstanden werden, die direkt oder indirekt mit einer Werkzeugaufnahme verbunden ist. Besonders bevorzugt soll darunter insbesondere eine Welle verstanden werden, die in Kraftübertragungsrichtung entlang eines Antriebsstrangs hinter der Antriebseinheit und/oder insbesondere hinter einer Getriebeeinheit angeordnet ist und/oder aus dieser ragt. Dabei sollen in diesem Zusammenhang unter einem "Antriebsstrang" insbesondere alle Elemente der Handwerkzeugmaschine verstanden werden, die in einem Betrieb dazu vorgesehen sind, eine Drehzahl und/oder ein Drehmoment von zumindest einem Teil der aktiven Antriebseinheit, insbesondere einer Motoreinheit, auf ein in der Werkzeugaufnahme angeordnetes Werkzeug zu übertragen. Des Weiteren soll in diesem Zusammenhang unter einer "aktiven Antriebseinheit" insbesondere eine Antriebseinheit verstanden werden, die zumindest alle Teile und/oder alle Einheiten eines Antriebsstrangs der Handwerkzeugmaschine umfasst, die direkt dazu vorgesehen sind, ein entlang des Antriebsstrangs übertragenes Drehmoment und/oder insbesondere eine entlang des Antriebsstrangs übertragene Drehzahl zu verändern und/oder zu erzeugen. Vorzugsweise weist die aktive Antriebseinheit zumindest eine Motoreinheit auf. Dabei soll unter einer "Motoreinheit" insbesondere eine elektrische und/oder mechanische und/oder pneumatische Einheit verstanden werden, die in einem Betrieb vorteilhaft zur Erzeugung einer Drehbewegung vorgesehen ist. Es sind verschiedene, dem Fachmann als sinnvoll erscheinende Motoreinheiten denkbar, vorteilhaft soll darunter jedoch insbesondere ein Elektromotor verstanden werden. Unter "getrennt" soll in diesem Zusammenhang insbesondere zerstörungsfrei relativ zueinander beweglich verstanden werden. Vorzugsweise soll darunter insbesondere zerstörungsfrei relativ zumindest bis zu einer Berührungslosigkeit beweglich verstanden werden. Ferner soll in diesem Zusammenhang unter einer "Formschlussverbindung" insbesondere eine in zumindest eine Richtung formschlüssige Verbindung zumindest zweier Bauteile verstanden werden. Dabei soll unter "formschlüssig" insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Unter "vorgesehen" soll insbesondere speziell ausgelegt und/oder ausgestattet verstanden werden.

Durch die erfindungsgemäße Ausgestaltung der Handwerkzeugmaschine kann vorteilhaft eine Drehmoment- und/oder Drehzahlübertragung bei axialer Verschiebbarkeit der Werkzeugaufnahme relativ zu der aktiven Antriebseinheit realisiert werden. Ferner kann dadurch vorteilhaft eine besonders zuverlässige getrennte Verbindung realisiert werden.

Es wird ferner vorgeschlagen, dass die Formschlussverbindung von jeweils miteinander korrespondierenden Passverzahnungen gebildet ist. Unter "korrespondierend" soll in diesem Zusammenhang insbesondere ineinander eingreifend verstanden werden. Vorzugsweise soll darunter insbesondere zumindest teilweise passend ineinander eingreifend verstanden werden. Ferner soll in diesem Zusammenhang unter einer "Passverzahnung" insbesondere eine Verzahnung zur Erzeugung einer Mitnahmeverbindung verstanden werden, wobei eine Verbindung insbesondere zumindest ein Element mit einer Innenverzahnung und ein Element mit einer Außenverzahnung aufweist. Vorzugsweise soll darunter insbesondere eine Verzahnung mit geraden Zahnflanken verstanden werden. Grundsätzlich wären jedoch auch eine Passverzahnung mit Evolventen- und/oder mit Kerbflanken und/oder eine andere, dem Fachmann als sinnvoll erscheinende Verzahnung denkbar. Dabei soll unter einer "geraden Zahnflanke" insbesondere eine Zahnflanke verstanden werden, deren Haupterstreckungsebene eine Drehachse der Werkzeugaufnahme und/oder der Antriebsspindel schneidet und parallel zu dieser verläuft. Alternativ soll darunter insbesondere eine Zahnflanke verstanden werden, deren Haupterstreckungsebene parallel zu einer Ebene verläuft, welche die Drehachse der Werkzeugaufnahme und/oder der Antriebsspindel schneidet und parallel zu dieser verläuft und durch eine Mittelachse eines Zahnes der Zahnflanke verläuft. Dabei soll unter einer "Haupterstreckungsebene" einer Zahnflanke insbesondere eine Ebene verstanden werden, welche parallel zu einer größten Seitenfläche eines kleinsten geometrischen Quaders ist, welcher die Flanke gerade noch vollständig umschließt, und insbesondere durch den Mittelpunkt des Quaders verläuft. Unter "zumindest teilweise" soll in diesem Zusammenhang insbesondere verstanden werden, dass eine Abweichung von einem vorgegebenen Wert maximal 30%, vorzugsweise maximal 15% und besonders bevorzugt maximal 5% beträgt. Dadurch kann eine besonders vorteilhafte Drehmoment- und/oder Drehzahlübertragung bei axialer Verschiebbarkeit der Werkzeugaufnahme relativ zu der aktiven Antriebseinheit und der Antriebsspindel realisiert werden.

Es wird weiter vorgeschlagen, dass eine Passung der Passverzahnungen als Gleitsitz ausgeführt ist. Unter einer "Passung" soll in diesem Zusammenhang insbesondere eine maßliche Beziehung zwischen zwei korrespondierenden, insbesondere toleranzbehafteten Elementen verstanden werden. Vorzugsweise soll darunter insbesondere eine Spielpassung, Übergangspassung oder Übermaßpassung verstanden werden. Ferner soll in diesem Zusammenhang unter einem "Gleitsitz" insbesondere eine Spielpassung mit einem geringfügigen Spiel verstanden werden. Vorzugsweise soll darunter insbesondere eine Spielpassung verstanden werden, bei der die Teile ohne merkliches Spiel beweglich oder insbesondere von Hand gerade noch verschiebbar sind. Dadurch kann eine besonders vorteilhafte, verkantungsfreie Drehmoment- und/oder Drehzahlübertragung bei axialer Verschiebbarkeit der Werkzeugaufnahme relativ zu der aktiven Antriebseinheit und der Antriebsspindel realisiert werden.

Zudem oder alternativ wäre denkbar, dass die Formschlussverbindung von korrespondierenden Kreuzschlitzverbindungselementen gebildet ist. Unter "Kreuzschlitzverbindungselementen" sollen in diesem Zusammenhang insbesondere Elemente zur Erzeugung einer Verbindung verstanden werden, wobei zumindest eines der Elemente einen kreuzförmigen Querschnitt senkrecht zu einer Drehachse der Werkzeugaufnahme und/oder der Antriebsspindel aufweist. Vorzugsweise weist das korrespondierende Element einen Querschnitt, senkrecht zu einer Drehachse der Werkzeugaufnahme und/oder der Antriebsspindel, mit einer Negativform eines Kreuzes auf.

Ferner wird vorgeschlagen, dass die Antriebsspindel und die Werkzeugaufnahme über die Formschlussverbindung zumindest begrenzt axial zueinander verschiebbar angeordnet sind. Dadurch kann vorteilhaft verhindert werden, dass die Formschlussverbindung durch eine relative Axialbewegung außer Eingriff kommt.

Erfindungsgemäß weist die Formschlussverbindung ein Umfangsspiel in Umfangsrichtung um eine Drehachse der Antriebsspindel und/oder der Werkzeugaufnahme auf. Unter einem "Umfangsspiel" soll in diesem Zusammenhang insbesondere ein Bewegungsfreiraum zwischen zumindest zwei Elementen in eine Umfangsrichtung verstanden werden. Vorzugsweise können sich die zumindest zwei Elemente in Umfangsrichtung zerstörungs- und/oder plastisch verformungsfrei relativ zueinander bewegen. Besonders bevorzugt soll darunter insbesondere ein Bewegungsfreiraum in Umfangsrichtung von mehr als 0,1°, vorzugsweise mehr als 0,5° und besonders bevorzugt mehr als 1° und weniger als 10°, vorzugsweise weniger als 5° und besonders bevorzugt weniger als 3° verstanden werden. Dadurch kann eine geringfügige Bewegung der Werkzeugaufnahme in Umfangsrichtung relativ zu der Antriebsspindel, bei vorteilhafter Drehmoment- und/oder Drehzahlübertragung realisiert werden.

Erfindungsgemäß weist die Handwerkzeugmaschine zumindest eine Erfassungseinheit zur Erfassung einer Kenngröße eines Umfangsspiels in Umfangsrichtung um eine Drehachse der Antriebsspindel und/oder der Werkzeugaufnahme, zur Ermittlung einer Soll-Drehrichtung auf. Unter einer "Erfassungseinheit" soll in diesem Zusammenhang insbesondere eine Einheit mit zumindest einer Sensoreinheit verstanden werden. Vorzugsweise soll darunter insbesondere eine Einheit verstanden werden, die zur Erfassung zumindest einer Kenngröße, besonders bevorzugt einer Kenngröße eines Drehmoments und/oder einer Relativkraft und/oder einer Drehzahldifferenz vorgesehen ist. Es sind verschiedene, dem Fachmann als sinnvoll erscheinende Erfassungseinheiten denkbar. Dabei soll unter einer "Sensoreinheit" insbesondere eine Einheit verstanden werden, die dazu vorgesehen ist, zumindest eine Kenngröße und/oder eine physikalische Eigenschaft zu erfassen, wobei eine Erfassung aktiv, wie insbesondere durch das Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Des Weiteren soll unter einer "Soll-Drehrichtung" in diesem Zusammenhang insbesondere eine Drehrichtung der Werkzeugaufnahme verstanden werden, welche für einen aktuellen Einsatzfall der Handwerkzeugmaschine vorgesehen ist. Vorzugsweise soll darunter insbesondere eine Drehrichtung der Werkzeugaufnahme verstanden werden, welche ein Bediener für einen aktuellen Betrieb vorsieht. Dadurch kann vorteilhaft eine Soll-Drehrichtung der Handwerkzeugmaschine erfasst werden.

Alternativ wäre jedoch auch denkbar, dass die Handwerkzeugmaschine zumindest eine Bedieneinheit zur manuellen Einstellung einer Soll-Drehrichtung aufweist. Unter einer "Bedieneinheit" soll in diesem Zusammenhang insbesondere eine Einheit verstanden werden, die zumindest ein Bauteil aufweist, das direkt von einem Bediener betätigbar ist und die dazu vorgesehen ist, durch eine Betätigung und/oder durch eine Eingabe von Parametern einen Prozess und/oder einen Zustand einer mit der Bedieneinheit gekoppelten Einheit zu beeinflussen und/oder zu ändern.

Es wird ferner vorgeschlagen, dass die Werkzeugaufnahme und/oder die Antriebsspindel im Bereich der Formschlussverbindung zumindest einen Aufnahmebereich zur Aufnahme eines Rücksetzelements aufweist und das Rücksetzelement dazu vorgesehen ist, die Werkzeugaufnahme gegenüber der Antriebsspindel in eine Grundstellung zu bewegen oder in dieser zu halten. Unter einem "Aufnahmebereich" soll in diesem Zusammenhang insbesondere ein Bereich, wie insbesondere eine Vertiefung oder eine Fläche, verstanden werden, der dazu vorgesehen ist, ein Element und/oder eine Einheit aufzunehmen. Ferner soll in diesem Zusammenhang unter einem "Rücksetzelement" insbesondere ein Element verstanden werden, das dazu vorgesehen ist, zumindest zwei relativ zueinander bewegliche Elemente mit einer Rückstellkraft, wenn möglich, in eine Grundstellung zu bewegen. Vorzugsweise ist die Rückstellkraft zumindest teilweise unabhängig von einer räumlichen Lage. Es sind verschiedene, dem Fachmann als sinnvoll erscheinende Rücksetzelemente denkbar, wie insbesondere Federelemente und/oder Magnetelemente. Unter einer "Grundstellung" der Werkzeugaufnahme soll in diesem Zusammenhang insbesondere eine Ruhestellung verstanden werden. Vorzugsweise soll darunter eine Stellung in einem unbetriebenen Zustand der Handwerkzeugmaschine verstanden werden. Dadurch kann vorteilhaft gewährleistet werden, dass sich die Werkzeugaufnahme bei Ausbleiben einer Gegenkraft in eine Grundstellung bewegt, wodurch insbesondere ein definierter Ruhezustand festgelegt werden kann. Ferner kann dadurch insbesondere eine vorteilhafte Aktivierung der aktiven Antriebseinheit durch eine Relativbewegung der Werkzeugaufnahme realisiert werden.

Es wird weiter vorgeschlagen, dass die Handwerkzeugmaschine eine Gewichtskraft aufweist, welche kleiner/gleich einer Rückstellkraft des Rücksetzelements ist. Dadurch kann vorteilhaft erreicht werden, dass eine Werkzeugaufnahme in einer Grundstellung verweilt, auch wenn die Handwerkzeugmaschine direkt auf die Werkzeugaufnahme gestellt wird.

Ferner wird vorgeschlagen, dass das Rücksetzelement von zumindest einer Schraubenfeder gebildet ist. Unter einer "Schraubenfeder" soll in diesem Zusammenhang insbesondere ein Federelement aus einem zylindrisch gewickelten Federdraht verstanden werden. Vorzugsweise soll darunter insbesondere eine Druck-Schraubenfeder verstanden werden. Grundsätzlich wären jedoch auch andere, dem Fachmann als sinnvoll erscheinende Federelemente denkbar. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Dadurch kann ein besonders vorteilhaftes und kostengünstiges Rücksetzelement bereitgestellt werden.

Alternativ wäre denkbar, dass das Rücksetzelement von zumindest einem Magnetelement gebildet ist. Unter einem "Magnetelement" soll in diesem Zusammenhang insbesondere ein Element verstanden werden, das bestimmte andere Körper magnetisch anzieht oder abstößt. Vorzugsweise soll darunter insbesondere ein Element verstanden werden, das ein statisches Magnetfeld stromflussfrei erzeugt. Dadurch kann ein vorteilhaftes Rücksetzelement bereitgestellt werden Vorzugsweise kann dadurch ein Rücksetzelement mit einem progressiven Kraft-Weg-Verlauf der Rückstellkraft bereitgestellt werden.

Die erfindungsgemäße Handwerkzeugmaschine soll hierbei nicht auf die oben beschriebene Anwendung und Ausführungsform beschränkt sein.

### Zeichnung

Weitere Vorteile ergeben sich aus der folgenden Zeichnungsbeschreibung. In der Zeichnung sind sechs Ausführungsbeispiele der Erfindung dargestellt. Die Zeichnung, die Beschreibung und die Ansprüche enthalten zahlreiche Merkmale in Kombination.

Es zeigen:
- Fig. 1: eine erfindungsgemäße Handwerkzeugmaschine mit einer angedeuteten Griffposition eines Bedieners in einer schematischen Darstellung,
- Fig. 2: die erfindungsgemäße Handwerkzeugmaschine in einer schematischen Schnittdarstellung mit einer Schnittebene parallel zu einer Haupterstreckungsrichtung der Handwerkzeugmaschine,
- Fig. 3: die erfindungsgemäße Handwerkzeugmaschine in einer alternativen schematischen Teilschnittdarstellung mit einer gegenüber Fig. 2 um 90° verdrehten Schnittebene,
- Fig. 4: einen Teilausschnitt der erfindungsgemäßen Handwerkzeugmaschine in einer schematischen Vollschnittdarstellung mit einer der Fig. 3 entsprechenden Schnittebene,
- Fig. 5: eine Werkzeugaufnahme, eine Antriebsspindel, ein mechanisches Schaltelement und ein elektrisches Schaltelement der erfindungsgemäßen Handwerkzeugmaschine in einer Grundstellung, in einer schematischen Schnittdarstellung,
- Fig. 6: die Werkzeugaufnahme, die Antriebsspindel, das mechanisches Schaltelement und das elektrische Schaltelement der erfindungsgemäßen Handwerkzeugmaschine in einer Betriebsstellung, in einer schematischen Schnittdarstellung,
- Fig. 7: die Werkzeugaufnahme und die Antriebsspindel mit einer Formschlussverbindung der erfindungsgemäßen Handwerkzeugmaschine in einer schematischen Explosionsdarstellung,
- Fig. 8: die erfindungsgemäße Handwerkzeugmaschine in einer schematischen Schnittdarstellung mit einer Schnittebene senkrecht zu einer Haupterstreckungsrichtung der Handwerkzeugmaschine,
- Fig. 9: eine Werkzeugaufnahme, eine Antriebsspindel, ein mechanisches Schaltelement und ein Rücksetzelement einer alternativen erfindungsgemäßen Handwerkzeugmaschine in einer schematischen Schnittdarstellung,
- Fig. 10: eine Werkzeugaufnahme und eine Antriebsspindel mit einer Formschlussverbindung einer weiteren alternativen erfindungsgemäßen Handwerkzeugmaschine in einer schematischen Explosionsdarstellung,
- Fig. 11: die Formschlussverbindung der Werkzeugaufnahme und der Antriebsspindel der weiteren alternativen erfindungsgemäßen Handwerkzeugmaschine in einem montierten Zustand, in einer schematischen Schnittdarstellung,
- Fig. 12: eine Werkzeugaufnahme und ein mechanisches Schaltelement einer weiteren alternativen erfindungsgemäßen Handwerkzeugmaschine in einer schematischen Darstellung,
- Fig. 13: eine Werkzeugaufnahme, eine Antriebsspindel, ein mechanisches Schaltelement und ein elektrisches Schaltelement einer weiteren alternativen erfindungsgemäßen Handwerkzeugmaschine in einer schematischen Schnittdarstellung und
- Fig. 14: eine Sensoreinheit einer weiteren alternativen erfindungsgemäßen Handwerkzeugmaschine in einer schematischen Darstellung.

### Beschreibung der Ausführungsbeispiele

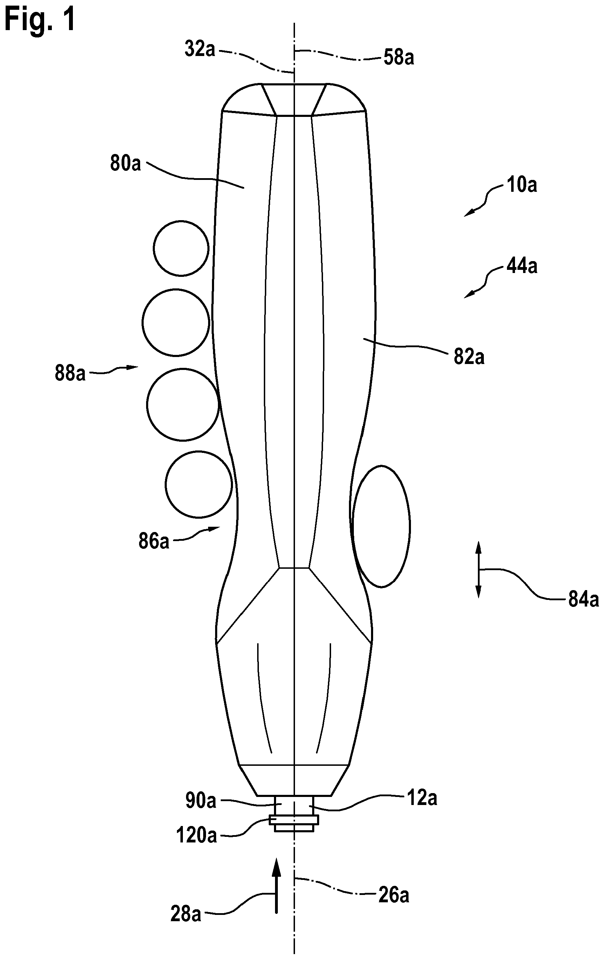

Figur 1 zeigt eine erfindungsgemäße Handwerkzeugmaschine 10a mit einer angedeuteten Griffposition eines Bedieners. Die Handwerkzeugmaschine 10a ist von einem Handwerkzeugschrauber gebildet. Die Handwerkzeugmaschine 10a ist annähernd schraubendreherförmig. Die Handwerkzeugmaschine 10a weist eine Gehäuseeinheit 44a und eine Werkzeugaufnahme 12a auf. Die Gehäuseeinheit 44a ist zweiteilig ausgebildet. Die Gehäuseeinheit 44a weist zwei Gehäuseschalenelemente 80a, 82a auf. Die zwei Gehäuseschalenelemente 80a, 82a sind in einem montierten Zustand dazu vorgesehen, Bauteile der Handwerkzeugmaschine 10a zu umschließen. Die Werkzeugaufnahme 12a ragt teilweise aus der Gehäuseeinheit 44a heraus. Die Werkzeugaufnahme 12a ragt in einem, entlang einer Haupterstreckungsrichtung 84a der Handwerkzeugmaschine 10a betrachtet, vorderen Bereich der Handwerkzeugmaschine 10a teilweise aus der Gehäuseeinheit 44a heraus. Grundsätzlich wäre jedoch auch denkbar, dass die Werkzeugaufnahme 12a bündig mit der Gehäuseeinheit 44a abschließt oder teilweise in der Gehäuseeinheit 44a versenkt ist. Die Gehäuseeinheit 44a der Handwerkzeugmaschine 10a weist, entlang der Haupterstreckungsrichtung 84a der Handwerkzeugmaschine 10a betrachtet, in einem mittleren Bereich eine Verjüngung 86a auf. Die Verjüngung 86a soll ein Abrutschen einer Hand 88a eines Bedieners in axialer Richtung entlang der Haupterstreckungsrichtung 84a erschweren. Die Verjüngung 86a ist in einem Betrieb der Handwerkzeugmaschine 10a dazu vorgesehen, einen Daumen und einen Zeigefinger der Hand 88a des Bedieners aufzunehmen. Grundsätzlich wäre jedoch auch denkbar, dass die Gehäuseeinheit 44a, entlang der Haupterstreckungsrichtung 84a der Handwerkzeugmaschine 10a betrachtet, in einem mittleren Bereich eine Erhöhung aufweist.

Die Werkzeugaufnahme 12a der Handwerkzeugmaschine 10a weist auf einer der Gehäuseeinheit 44a abgewandten Seite einen magnetischen Bithalter 90a mit einer Sechskantinnenkontur auf. Der Bithalter 90a ist dazu vorgesehen, einen Bit aufzunehmen. Die Werkzeugaufnahme 12a ist gesintert und wird bei der Herstellung einem Härteprozess unterzogen. Bei dem Sintern werden kalibrierte Werkzeuge verwendet.

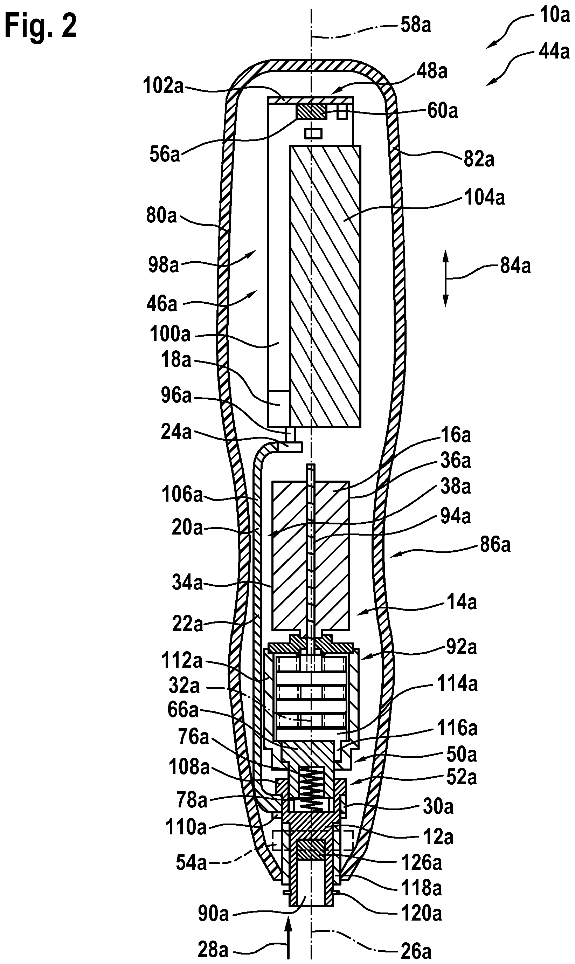

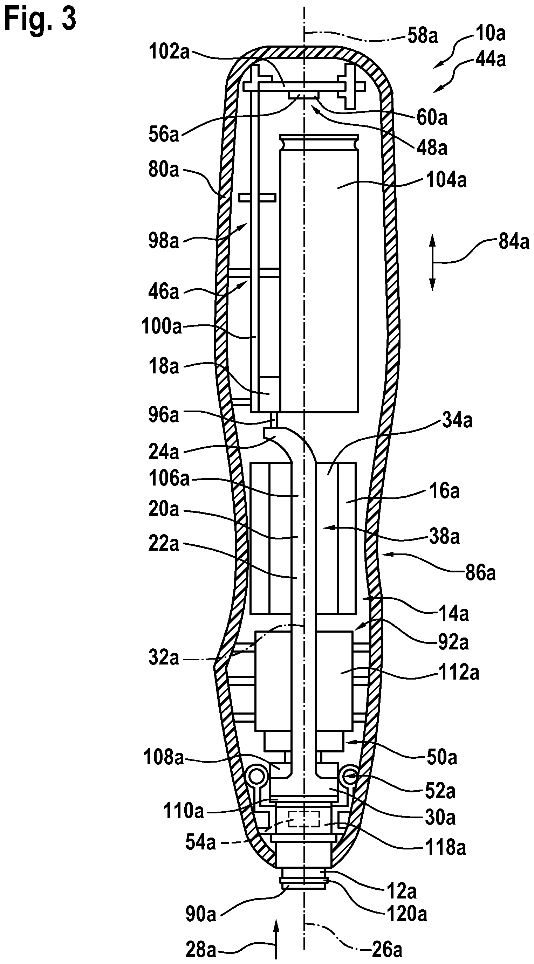

Ferner weist die Handwerkzeugmaschine 10a eine aktive Antriebseinheit 14a auf. Die aktive Antriebseinheit 14a umfasst eine Motoreinheit 16a und eine Getriebeeinheit 92a. Die Motoreinheit 16a und die Getriebeeinheit 92a sind entlang der Haupterstreckungsrichtung 84a der Handwerkzeugmaschine 10a hintereinander in der Gehäuseeinheit 44a angeordnet. Die Motoreinheit 16a und die Getriebeeinheit 92a sind zur Übertragung einer Drehzahl und eines Drehmoments direkt miteinander verbunden. Die Motoreinheit 16a weist eine Motorwelle 94a auf, welche direkt in die Getriebeeinheit 92a hineinragt. Dadurch kann insbesondere eine kompakte Bauweise erreicht werden (Figuren 2, 3).

Die Getriebeeinheit 92a ist von einem Planetengetriebe gebildet. Die Getriebeeinheit 92a ist von einem Planetengetriebe mit drei Getriebestufen gebildet. Die Getriebeeinheit 92a weist eine Gehäuseeinheit 112a auf, welche einen restlichen Teil der Getriebeeinheit 92a umschließt (Figuren 2, 3).

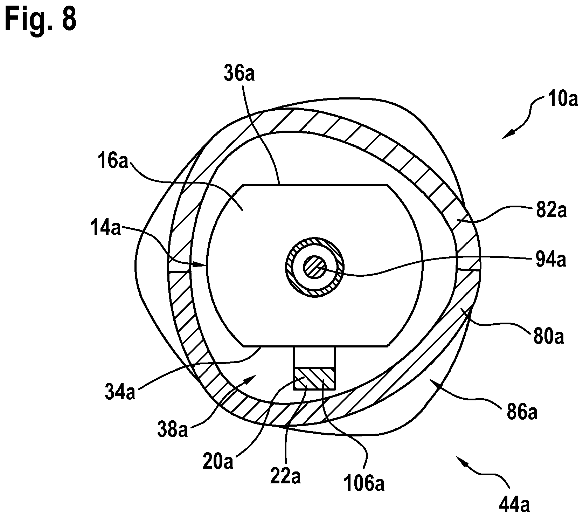

Die Motoreinheit 16a ist von einem Elektromotor gebildet. Die Motoreinheit 16a weist zwei parallel zu einer Drehachse 32a der Motoreinheit 16a verlaufende Abflachungen 34a, 36a auf. Die Drehachse 32a bildet eine Drehachse 32a der Motorwelle 94a und verläuft parallel zu der Haupterstreckungsrichtung 84a der Handwerkzeugmaschine 10a. Die Drehachse 32a bildet eine Drehachse 32a für die gesamte aktive Antriebseinheit 14a. Die Motoreinheit 16a ist teilzylindrisch ausgebildet, mit den zwei gegenüberliegenden Abflachungen 34a, 36a, die eine Zylindermantelfläche der Motoreinheit 16a unterbrechen. Die Abflachungen 34a, 36a erstrecken sich, entlang der Drehachse 32a betrachtet, über eine gesamte Erstreckung der Motoreinheit 16a. Die Motoreinheit 16a ist im Bereich der Verjüngung 86a der Gehäuseeinheit 44a in der Gehäuseeinheit 44a angeordnet (Figur 8).

Ferner weist die Handwerkzeugmaschine 10a ein elektrisches Schaltelement 18a auf, das zur Aktivierung einer Drehbewegung der Motoreinheit 16a vorgesehen ist. Das elektrische Schaltelement 18a ist von einem elektrischen Schalter mit einem Druccknopf 96a gebildet. Das elektrische Schaltelement 18a ist auf einer Leiterplatte 98a einer Aktivierungseinheit 46a angeordnet. Die Aktivierungseinheit 46a ist von einer Steuerelektronik gebildet. Die Leiterplatte 98a der Aktivierungseinheit 46a ist zweiteilig ausgebildet. Ein Teilbereich 100a der Leiterplatte 98a weist eine Haupterstreckungsebene auf, die parallel zu der Haupterstreckungsrichtung 84a der Handwerkzeugmaschine 10a ausgerichtet ist. Ein zweiter Teilbereich 102a der Handwerkzeugmaschine 10a weist eine Haupterstreckungsebene auf, die senkrecht zu der Haupterstreckungsrichtung 84a der Handwerkzeugmaschine 10a ausgerichtet ist. Durch das Abknicken der Leiterplatte 98a kann eine besonders kompakte Handwerkzeugmaschine 10a bereitgestellt werden. Die Aktivierungseinheit 46a ist in einem von der Werkzeugaufnahme 12a abgewandten Bereich der Gehäuseeinheit 44a hinter der Motoreinheit 16a angeordnet (Figuren 2, 3).

Ferner weist die Handwerkzeugmaschine 10a eine Energiespeichervorrichtung 104a auf. Die Energiespeichervorrichtung 104a ist von einer Akkuvorrichtung gebildet. Die Energiespeichervorrichtung 104a ist von einem zylindrischen Lithium-Ionen-Akkumulator gebildet. Die Energiespeichervorrichtung 104a ist in einem von der Werkzeugaufnahme 12a abgewandten Bereich der Gehäuseeinheit 44a, hinter der Motoreinheit 16a, bei der Aktivierungseinheit 46a angeordnet. Eine Haupterstreckungsrichtung der Energiespeichervorrichtung 104a erstreckt sich parallel zu der Haupterstreckungsrichtung 84a der Handwerkzeugmaschine 10a. Die Aktivierungseinheit 46a ist über das elektrische Schaltelement 18a elektrisch mit der Energiespeichervorrichtung 104a verbunden (Figuren 2, 3).

Die Aktivierungseinheit 46a ist zur Ansteuerung der aktiven Antriebseinheit 14a vorgesehen. Die Aktivierungseinheit 46a ist dazu vorgesehen, die Motoreinheit 16a der aktiven Antriebseinheit 14a anzusteuern. Die Aktivierungseinheit 46a ist nicht weiter sichtbar, elektrisch mit der Motoreinheit 16a verbunden.

Des Weiteren weist die Handwerkzeugmaschine 10a ein mechanisches Schaltelement 20a auf zur Übertragung eines Schaltsignals entlang einer Drehachse 26a der Werkzeugaufnahme 12a auf das elektrische Schaltelement 18a über die gesamte aktive Antriebseinheit 14a hinweg. Das mechanische Schaltelement 20a ist in einem Bereich 38a der Abflachung 34a an der Motoreinheit 16a vorbeigeführt (Figur 8). Das mechanische Schaltelement 20a ist von einem Schaltschieber 22a gebildet. Der Schaltschieber 22a weist einen stegförmigen Teilbereich 106a auf, der einen wesentlichen Teil des Schaltschiebers 22a bildet. Der stegförmige Teilbereich 106a bildet einen mittleren Teilbereich des Schaltschiebers 22a. Eine Haupterstreckungsrichtung des stegförmigen Teilbereichs 106a verläuft parallel zu der Haupterstreckungsrichtung 84a der Handwerkzeugmaschine 10a. Ferner weist der Schaltschieber 22a in einem der Werkzeugaufnahme 12a abgewandten Bereich einen gegenüber der Drehachse 26a der Werkzeugaufnahme 12a abgewinkelten Teilbereich 24a auf. Der abgewinkelte Teilbereich 24a schließt direkt an den stegförmigen Teilbereich 106a an. Auf einer dem abgewinkelten Teilbereich 24a abgewandten Seite, beziehungsweise auf einer der Werkzeugaufnahme 12a zugewandten Seite des Schaltschiebers 22a, ist ein Ringelement 30a angeordnet. Das Ringelement 30a ist zur formschlüssigen Verbindung des Schaltschiebers 22a mit der Werkzeugaufnahme 12a vorgesehen. Über das Ringelement 30a ist der Schaltschieber 22a formschlüssig mit der Werkzeugaufnahme 12a verbunden. Das Ringelement 30a erstreckt sich in einer Ebene senkrecht zu der Haupterstreckungsrichtung 84a der Handwerkzeugmaschine 10a. Das Ringelement 30a schließt direkt an den stegförmigen Teilbereich 106a des Schaltschiebers 22a an. Der Schaltschieber 22a ist einstückig ausgebildet und wird aus Polyoxymethylen hergestellt (Figuren 2, 3).

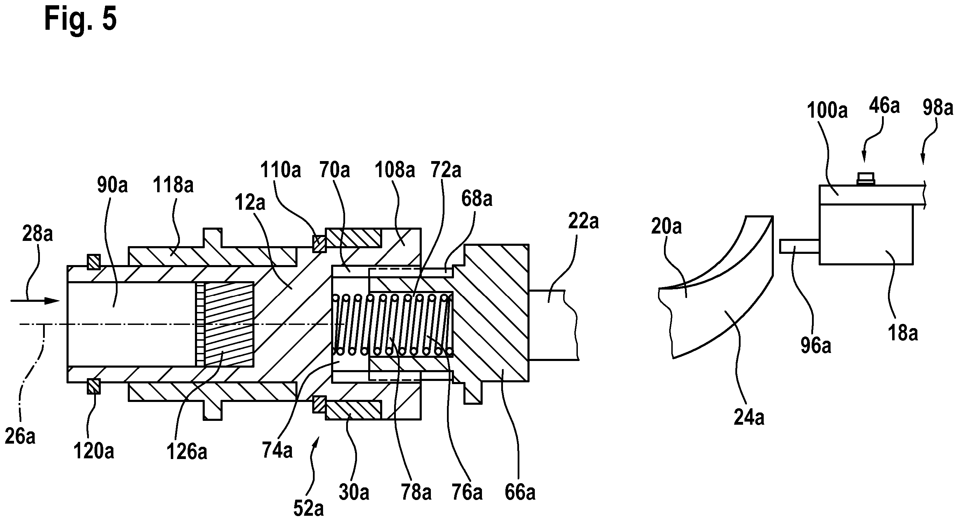

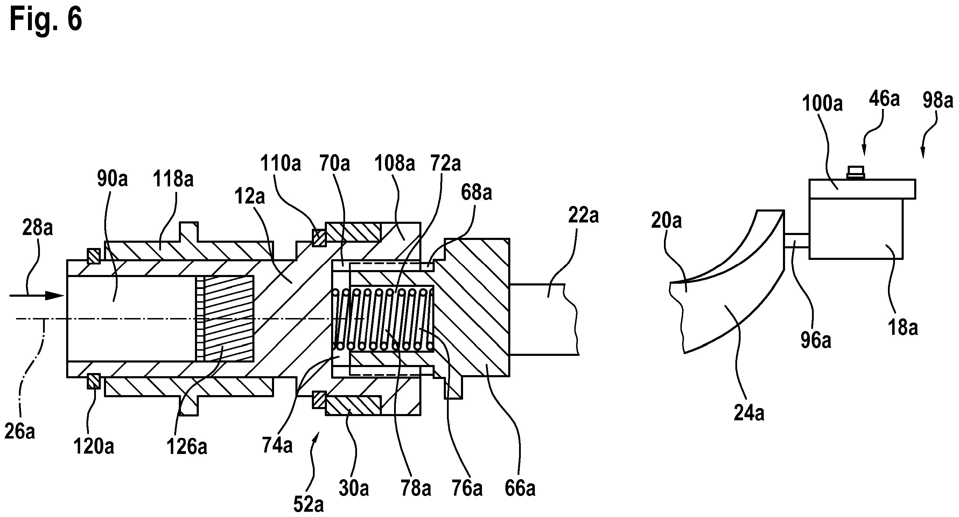

Die Werkzeugaufnahme 12a weist, entlang der Haupterstreckungsrichtung 84a der Handwerkzeugmaschine 10a betrachtet, auf einer der Getriebeeinheit 92a zugewandten Seite eine umlaufende Erhöhung 108a auf, welche sich in Umfangsrichtung um die Drehachse 26a erstreckt. In einem montierten Zustand der Handwerkzeugmaschine 10a liegt das Ringelement 30a des Schaltschiebers 22a an der Erhöhung 108a an und umschließt die Werkzeugaufnahme 12a. Auf einer der Erhöhung 108a abgewandten Seite des Ringelements 30a ist ein Sicherungsring 110a in einer Nut angeordnet. Das Ringelement 30a ist dadurch axial und radial formschlüssig mit der Werkzeugaufnahme 12a verbunden. In Umfangsrichtung ist die Werkzeugaufnahme 12a gegenüber dem Ringelement 30a beweglich bzw. verdrehbar. Durch die Herstellung des Schaltschiebers 22a aus Polyoxymethylen kann vorteilhaft eine reibungsarme Verdrehung zwischen dem Ringelement 30a und der Werkzeugaufnahme 12a realisiert werden. Das Schaltsignal, welches von dem Schaltschieber 22a übertragen wird, ist von einer Axialbewegung 28a der Werkzeugaufnahme 12a relativ zu der aktiven Antriebseinheit 14a gebildet. Die Axialbewegung 28a der Werkzeugaufnahme 12a wird über das Ringelement 30a auf den gesamten Schaltschieber 22a übertragen. Das Schaltsignal soll eine Aktivierung der Handwerkzeugmaschine 10a anzeigen. Führt die Werkzeugaufnahme 12a eine Axialbewegung 28a in Richtung der aktiven Antriebseinheit 14a durch, insbesondere durch das Aufdrücken der Handwerkzeugmaschine 10a durch einen Bediener auf eine Arbeitsfläche hervorgerufen, soll dies anzeigen, dass ein Bediener eine Aktivierung der Handwerkzeugmaschine 10a wünscht. Durch die Axialbewegung 28a der Werkzeugaufnahme 12a macht der Schaltschieber 22a ebenfalls die Axialbewegung 28a. Dabei drückt der abgewinkelte Teilbereich 24a des Schaltschiebers 22a den Druckknopf 96a des elektrischen Schaltelements 18a nach innen und schließt dadurch einen Kontakt des elektrischen Schaltelements 18a. Über das elektrische Schaltelement 18a wird die Aktivierungseinheit 46a mit Energie der Energiespeichervorrichtung 104a versorgt (Figuren 5, 6).

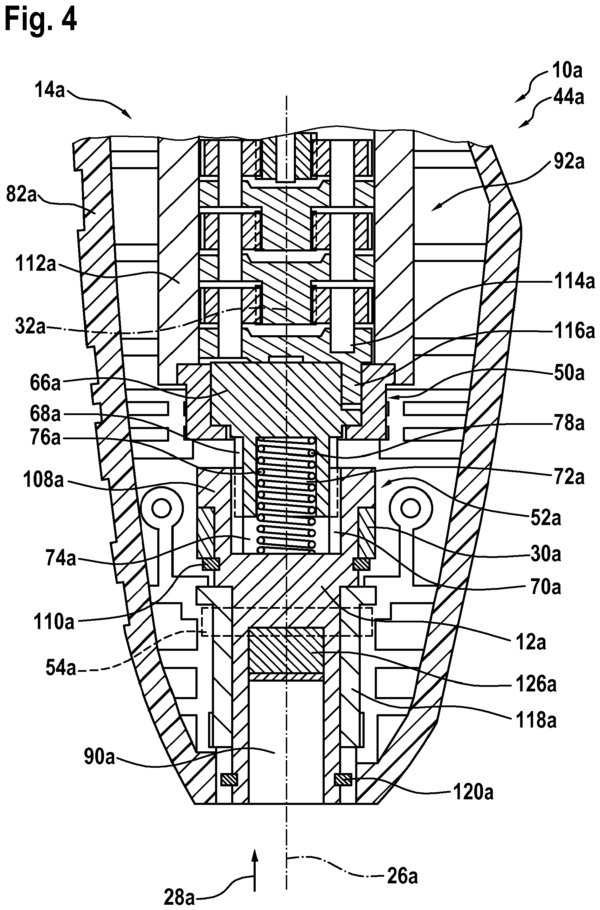

Räumlich als auch entlang eines Kraftflusses sind zwischen der Getriebeeinheit 92a und der Werkzeugaufnahme 12a eine Spindellockvorrichtung 50a und eine Antriebsspindel 66a angeordnet. Die Spindellockvorrichtung 50a ist dazu vorgesehen, in einem ausgeschalteten Zustand der Handwerkzeugmaschine 10a eine Drehbewegung der Werkzeugaufnahme 12a zu unterbinden. Die Spindellockvorrichtung 50a ist dazu vorgesehen, die Werkzeugaufnahme 12a bei ausbleibender Drehzahl- und/oder Drehmomentübertragung von der aktiven Antriebseinheit 14a gegen ein Verdrehen zu blockieren. Die Spindellockvorrichtung 50a schließt direkt an die Getriebeeinheit 92a an. Die Spindellockvorrichtung 50a ist in der Gehäuseeinheit 112a der Getriebeeinheit 92a angeordnet. Ein der Spindellockvorrichtung 50a zugeordneter, letzter Planetenträger 114a der Getriebeeinheit 92a ist einstückig mit einem Mitnahmeelement 116a der Spindellockvorrichtung 50a ausgebildet. Der Planetenträger 114a überträgt eine Drehbewegung der Getriebeeinheit 92a auf das Mitnahmeelement 116a der Spindellockvorrichtung 50a. Das Mitnahmeelement 116a überträgt eine Drehbewegung der Getriebeeinheit 92a über nicht weiter sichtbare Zylinderrollen auf die Antriebsspindel 66a, die in der Gehäuseeinheit 112a der Getriebeeinheit 92a gelagert ist. Eine Übertragung einer Drehbewegung von der Antriebsspindel 66a über die nicht weiter sichtbaren Zylinderrollen auf das Mitnahmeelement 116a wird durch die Spindellockvorrichtung 50a unterbunden. Bei einer Übertragung einer Drehbewegung von der Antriebsspindel 66a über die nicht weiter sichtbaren Zylinderrollen auf das Mitnahmeelement 116a verkeilen sich die nicht weiter sichtbaren Zylinderrollen zwischen der Antriebsspindel 66a und der Gehäuseeinheit 112a im Bereich der Spindellockvorrichtung 50a, wodurch eine Drehbewegung unterbunden wird. Die Werkzeugaufnahme 12a wird von der aktiven Antriebseinheit 14a über die Antriebsspindel 66a angetrieben. Die Antriebsspindel 66a ist gesintert und wird bei der Herstellung einem Härteprozess unterzogen. Bei dem Sintern werden kalibrierte Werkzeuge verwendet (Figur 4).

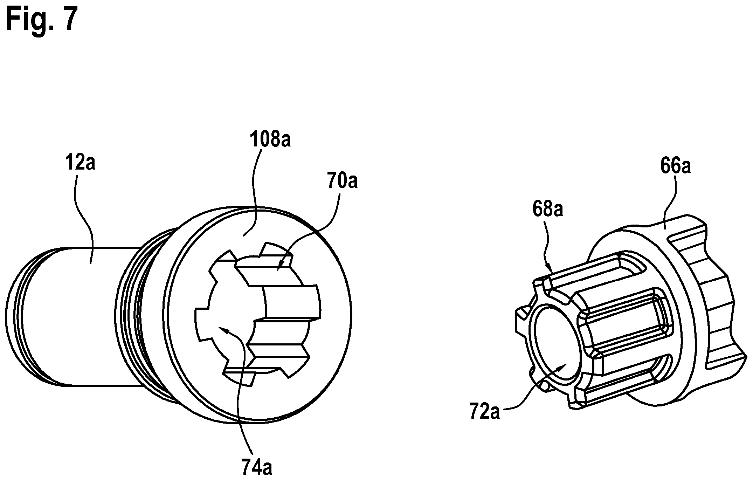

Die Werkzeugaufnahme 12a und die Antriebsspindel 66a sind getrennt voneinander ausgebildet und in Umfangsrichtung über eine Formschlussverbindung 52a verbunden. Die Formschlussverbindung 52a befindet sich auf einer der Getriebeeinheit 92a abgewandten Seite der Antriebsspindel 66a. Die Formschlussverbindung 52a dient zur Drehzahl- und zur Drehmomentübertragung zwischen der Antriebsspindel 66a und der Werkzeugaufnahme 12a. Die Formschlussverbindung 52a ist von jeweils miteinander korrespondierenden Passverzahnungen 68a, 70a gebildet. Die Antriebsspindel 66a weist eine Außen-Passverzahnung 68a auf, die mit einer Innen-Passverzahnung 70a der Werkzeugaufnahme 12a korrespondiert. Eine Passung der Passverzahnungen 68a, 70a der Antriebsspindel 66a und der Werkzeugaufnahme 12a ist als Gleitsitz ausgeführt. Zwischen der Werkzeugaufnahme 12a und der aktiven Antriebseinheit 14a liegt ein Umfangsspiel in Umfangsrichtung um die Drehachse 26a der Werkzeugaufnahme 12a vor. Die Formschlussverbindung 52a weist ein Umfangsspiel in Umfangsrichtung um die Drehachse 26a der Antriebsspindel 66a und der Werkzeugaufnahme 12a auf. Zwischen der Außen-Passverzahnung 68a der Antriebsspindel 66a und der Innen-Passverzahnung 70a der Werkzeugaufnahme 12a liegt ein Umfangsspiel vor. Das Umfangsspiel beträgt circa 2°. Ferner sind die Antriebsspindel 66a und die Werkzeugaufnahme 12a über die Formschlussverbindung 52a begrenzt axial zueinander verschiebbar angeordnet. Die Passverzahnungen 68a, 70a der Formschlussverbindung 52a weisen axial verlaufende Zahnflanken auf, wodurch die Passverzahnungen 68a, 70a axial gegeneinander verschiebbar sind. Die Antriebsspindel 66a ist axial und radial positionsfest in der Gehäuseeinheit 44a der Handwerkzeugmaschine 10a angeordnet. Die Werkzeugaufnahme 12a ist über ein Gleitlager 118a in der Gehäuseeinheit 44a der Handwerkzeugmaschine 10a radial positionsfest angeordnet. Die Werkzeugaufnahme 12a ist axial begrenzt in dem Gleitlager 118a beweglich. Das Gleitlager 118a schlägt bei einer Axialbewegung 28a der Werkzeugaufnahme 12a auf einer der Antriebsspindel 66a zugewandten Seite an eine Abstufung in der Werkzeugaufnahme 12a und auf einer der Antriebsspindel 66a abgewandten Seite an einem Sicherungsring 120a in einer Nut der Werkzeugaufnahme 12a an. Das Gleitlager 118a ist fest mit der Gehäuseeinheit 44a der Handwerkzeugmaschine 10a verbunden (Figuren 4, 7).

Die Werkzeugaufnahme 12a und die Antriebsspindel 66a weisen im Bereich der Formschlussverbindung 52a jeweils einen Aufnahmebereich 72a, 74a zur Aufnahme eines Rücksetzelements 76a auf. Die Aufnahmebereiche 72a, 74a sind jeweils gegeneinander gerichtet und bilden damit einen großen geschlossenen Aufnahmebereich. Der Aufnahmebereich 72a der Antriebsspindel 66a ist von einer zylindrischen Ausnehmung an einer der Werkzeugaufnahme 12a zugewandten Stirnfläche gebildet. Der Aufnahmebereich 74a der Werkzeugaufnahme 12a ist von einer zylindrischen Ausnehmung gebildet, an dessen Mantelfläche die Innen-Passverzahnung 70a angeordnet ist. Das Rücksetzelement 76a ist dazu vorgesehen, die Werkzeugaufnahme 12a gegenüber der Antriebsspindel 66a in eine Grundstellung zu bewegen oder in dieser zu halten. Unter der "Grundstellung" soll eine entlang der Haupterstreckungsrichtung 84a maximal mögliche Axialerstreckung der Antriebsspindel 66a gemeinsam mit der Werkzeugaufnahme 12a verstanden werden. In der Grundstellung liegt das Gleitlager 118a an der Abstufung in der Werkzeugaufnahme 12a an und begrenzt eine weitere Axialerstreckung. Das Rücksetzelement 76a ist von einer Schraubenfeder 78a gebildet. Das Rücksetzelement 76a stützt sich in einem montierten Zustand axial sowohl an der Antriebsspindel 66a als auch an der Werkzeugaufnahme 12a ab und drückt sie mit einer Rückstellkraft auseinander. Eine Gewichtskraft der Handwerkzeugmaschine 10a ist kleiner als die Rückstellkraft des Rücksetzelement 76a. Dadurch, dass die Gewichtskraft der Handwerkzeugmaschine 10a kleiner ist als die Rückstellkraft des Rücksetzelements 76a, kann eine Lagerung der Handwerkzeugmaschine 10a ermöglicht werden, ohne dass die Handwerkzeugmaschine 10a unbeabsichtigt aktiviert wird (Figur 4).

Die Aktivierungseinheit 46a weist zur Ermittlung eines Soll-Betriebszustands eine Erfassungseinheit 48a auf. Die Erfassungseinheit 48a ist zur Erfassung von Kenngrößen einer Drehzahldifferenz zwischen der Werkzeugaufnahme 12a und der aktiven Antriebseinheit 14a in Umfangsrichtung um die Drehachse 32a der aktiven Antriebseinheit 14a und die Drehachse 26a der Werkzeugaufnahme 12a vorgesehen. Die Drehachse 32a der aktiven Antriebseinheit 14a ist koaxial zu der Drehachse 26a der Werkzeugaufnahme 12a abgeordnet. Die Aktivierungseinheit 46a ist zur Ermittlung einer Soll-Drehrichtung der Werkzeugaufnahme 12a vorgesehen. Die Erfassungseinheit 48a ist ferner zur Erfassung einer Kenngröße eines Umfangsspiels in Umfangsrichtung um die Drehachse 26a der Werkzeugaufnahme 12a, zur Ermittlung einer Soll-Drehrichtung vorgesehen (Figuren 2, 3).

Die Erfassungseinheit 48a weist eine Sensoreinheit 56a auf, die dazu vorgesehen ist, eine Drehbewegung der Gehäuseeinheit 44a relativ zu der Werkzeugaufnahme 12a zu erfassen. Die Sensoreinheit 56a ist dazu vorgesehen, eine Drehbewegung der Gehäuseeinheit 44a relativ zu einer Umgebung zu erfassen. Die Sensoreinheit 56a weist eine Messachse 58a auf, die koaxial zu der Drehachse 26a der Werkzeugaufnahme 12a ausgerichtet ist. Die Sensoreinheit 56a ist von einem Drehratensensor 60a gebildet. Der Drehratensensor 60a ist auf der Leiterplatte 98a der Aktivierungseinheit 46a angeordnet. Der Drehratensensor 60a ist auf dem zweiten Teilbereich 102a der Leiterplatte 98a angeordnet. Der Drehratensensor 60a ist auf der Leiterplatte 98a auf der Drehachse 26a der Werkzeugaufnahme 12a angeordnet (Figuren 2, 3).

Ferner weist die Erfassungseinheit 48a eine Sensoreinheit 54a zur Erfassung einer Kenngröße einer Drehzahl der Werkzeugaufnahme 12a auf. Die Sensoreinheit 54a ist von einem Drehzahlsensor gebildet. Die Sensoreinheit 54a ist von einem Hallsensor gebildet. Die Sensoreinheit 54a ist dazu vorgesehen, eine Drehbewegung der Werkzeugaufnahme 12a relativ zu der aktiven Antriebseinheit 14a und relativ zu der Gehäuseeinheit 44a zu erfassen. Ein Geberring der Sensoreinheit 54a ist fest mit der Werkzeugaufnahme 12a verbunden. Ein Sensorelement der Sensoreinheit 54a ist fest mit der Gehäuseeinheit 44a verbunden (Figur 4).

Bei einem geplanten Betrieb der Handwerkzeugmaschine 10a durch einen Bediener wird in einem ersten Schritt ein nicht weiter sichtbares Werkzeug in die Werkzeugaufnahme 12a eingesetzt. Wird nun die Handwerkzeugmaschine 10a mit der Werkzeugaufnahme 12a voraus entlang der Haupterstreckungsrichtung 84a gegen eine Arbeitsfläche, insbesondere gegen eine Schraube, gedrückt, wird die Werkzeugaufnahme 12a axial gegen die Antriebsspindel 66a verschoben. Dadurch wird gleichzeitig der Schaltschieber 22a axial in Richtung des elektrischen Schaltelements 18a geschoben. Dabei drückt der abgewinkelte Teilbereich 24a des Schaltschiebers 22a den Druckknopf 96a des elektrischen Schaltelements 18a nach innen und schließt dadurch einen Kontakt des elektrischen Schaltelements 18a (Figur 6). Dadurch wird die Aktivierungseinheit 46a mit Energie der Energiespeichervorrichtung 104a versorgt und wird dadurch aktiviert. Wird die Handwerkzeugmaschine 10a nun in eine gewünschte Soll-Drehrichtung verdreht, erfährt die Werkzeugaufnahme 12a aufgrund der Schraube, in welcher ein Werkzeug der Werkzeugaufnahme 12a sitzt, eine Trägheit. Dadurch entsteht eine Relativbewegung zwischen der Werkzeugaufnahme 12a und einem Rest der Handwerkzeugmaschine 10a, die durch das Umfangsspiel der Formschlussverbindung 52a ermöglicht wird. Diese Relativbewegung wird über die Sensoreinheiten 54a, 56a in Form einer Drehzahldifferenz erfasst. Über die Erfassungseinheit 48a ermittelt die Aktivierungseinheit 46a so eine Soll-Drehrichtung. Anschließend steuert die Aktivierungseinheit 46a die Motoreinheit 16a entsprechend der Soll-Drehrichtung an und die Motoreinheit 16a startet in der vorgegebenen Drehrichtung. Will ein Bediener einen Betrieb der Handwerkzeugmaschine 10a beenden oder eine Drehrichtung verändern, nimmt der Bediener einen Druck von der Handwerkzeugmaschine 10a auf die Schaube. Die Werkzeugaufnahme 12a wird durch das Rücksetzelement 76a in die Grundstellung zurück bewegt. Dabei bewegt sich der Schaltschieber 22a axial von dem elektrischen Schaltelement 18a weg, der Druckknopf 96a bewegt sich nach außen und der Kontakt des elektrischen Schaltelements 18a wird geöffnet (Figur 5). Nun kann der Betrieb beendet werden oder zur Änderung einer Drehrichtung der Vorgang von Neuem begonnen werden. Dadurch kann insbesondere eine intuitive Bedienung erreicht werden. Ferner kann auf einen separaten Ein-/Ausschalter verzichtet werden, wodurch wiederum eine einfache und kostengünstige Abdichtung des Elektrowerkzeugs z.B. gegen Schmutz, Wasser oder Staub realisiert werden kann.

Grundsätzlich wäre jedoch auch denkbar, dass eine Soll-Drehrichtung über ein manuelles Bedienelement eingestellt wird, dadurch könnte beispielsweise Sensorik eingespart werden.

Grundsätzlich wäre jedoch auch denkbar, dass die Erfassungseinheit 48a zur Erfassung einer Kenngröße einer Relativkraft zwischen der Werkzeugaufnahme 12a und der aktiven Antriebseinheit 14a vorgesehen ist. Dafür könnte ein nicht weiter sichtbarer Kraftaufnehmer in die Formschlussverbindung 52a integriert werden, der eine Relativkraft in Umfangsrichtung zwischen den Passverzahnungen 68a, 70a erfasst. Dadurch kann eine Soll-Drehrichtung erfasst werden.

Grundsätzlich wäre auch denkbar, dass die Erfassungseinheit 48a zur Erfassung einer Kenngröße eines Drehmoments zwischen der Werkzeugaufnahme 12a und der aktiven Antriebseinheit 14a vorgesehen ist. Dafür könnte eine nicht weiter sichtbare Sensoreinheit angebracht werden, die ein Drehmoment zwischen der Werkzeugaufnahme 12a und der aktiven Antriebseinheit 14a ermittelt. Dafür würde insbesondere kein Umfangsspiel benötigt werden.

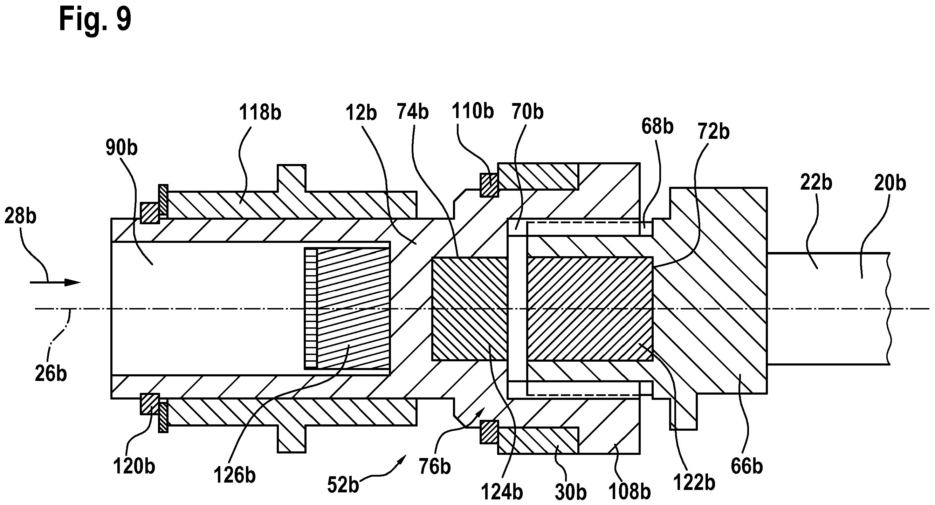

In den Figuren 9 bis 14 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In den Ausführungsbeispielen der Figuren 9 bis 14 ist der Buchstabe a durch die Buchstaben b bis f ersetzt.

Die Figur 9 zeigt eine Werkzeugaufnahme 12b, eine Antriebsspindel 66b, ein mechanisches Schaltelement 20b und ein Rücksetzelement 76b einer alternativen erfindungsgemäßen Handwerkzeugmaschine 10b. Das Rücksetzelement 76b ist von zwei Magnetelementen 122b, 124b gebildet. Das Magnetelement 122b ist in einem Aufnahmebereich 72b der Antriebsspindel 66b angeordnet. Das zweite Magnetelement 124b ist in einem Aufnahmebereich 74b der Werkzeugaufnahme 12b angeordnet. Die Magnetelemente 122b, 124b sind in die Aufnahmebereiche 72b, 74b eingeklebt. Die Magnetelemente 122b, 124b stoßen sich gegenseitig ab.

Grundsätzlich wäre auch denkbar, dass das Magnetelement 124b, welches in dem Aufnahmebereich 74b der Werkzeugaufnahme 12b angeordnet ist, einstückig mit einem Magnetelement 126b eines Bithalters 90b der Werkzeugaufnahme 12a ausgebildet ist.

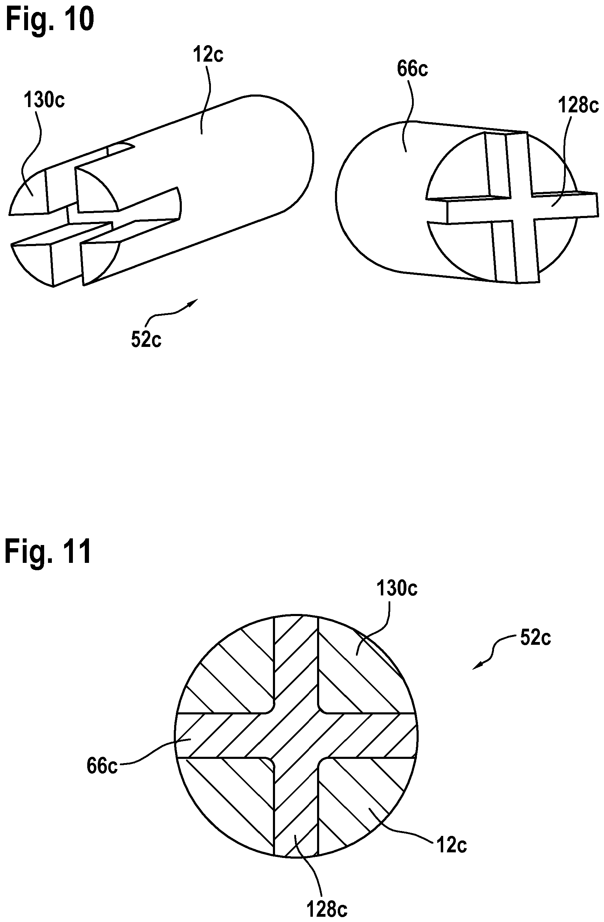

Die Figur 10 zeigt eine Werkzeugaufnahme 12c und eine Antriebsspindel 66c, mit einer Formschlussverbindung 52c einer weiteren alternativen erfindungsgemäßen Handwerkzeugmaschine 10c in einer schematischen Explosionsdarstellung. Die Formschlussverbindung 52c ist von korrespondierenden Kreuzschlitzverbindungselementen 128c, 130c gebildet. Die Antriebsspindel 66c weist das erste Kreuzschlitzverbindungselement 128c auf. Das Kreuzschlitzverbindungselement 128c ist von einem axialen Fortsatz gebildet. Das Kreuzschlitzelement 128c weist, senkrecht zu einer Drehachse 26c der Werkzeugaufnahme 12c betrachtet, einen konstanten kreuzförmigen Querschnitt auf. Die Werkzeugaufnahme 12c weist das zweite Kreuzschlitzverbindungselement 130c auf. Das Kreuzschlitzverbindungselement 130c ist von einem axialen Fortsatz gebildet. Das Kreuzschlitzelement 130c ist von einem zylindrischen Fortsatz mit einer sich axial erstreckenden Ausnehmung gebildet. Die Ausnehmung weist, senkrecht zu der Drehachse 26c der Werkzeugaufnahme 12c betrachtet, einen konstanten kreuzförmigen Querschnitt auf. Das zweite Kreuzschlitzverbindungselement 130c bildet ein Negativ des ersten Kreuzschlitzverbindungselements 128c (Figur 11). Aufnahmebereiche 72c, 74c für ein Rücksetzelement 76c sind hier aus Übersichtlichkeitsgründen nicht weiter dargestellt.

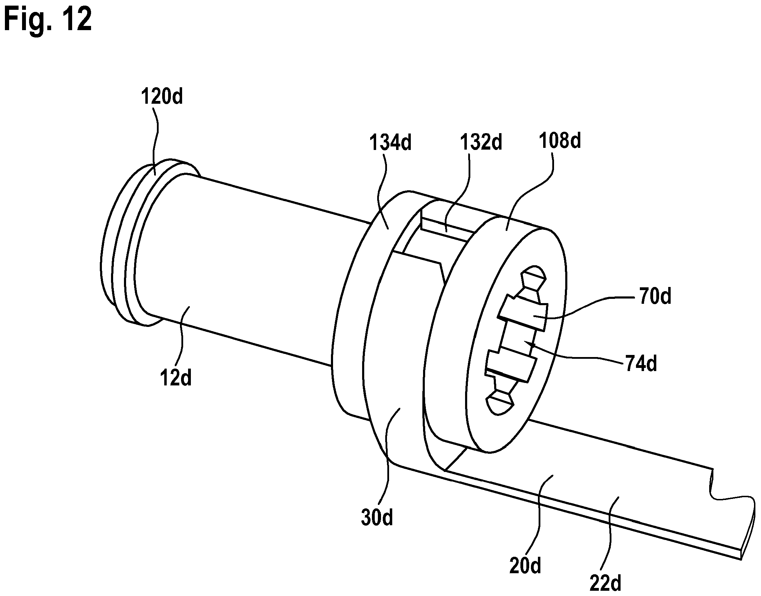

Figur 12 zeigt eine Werkzeugaufnahme 12d und ein mechanisches Schaltelement 20d einer weiteren alternativen erfindungsgemäßen Handwerkzeugmaschine 10d. Das mechanische Schaltelement 20d ist von einem Schaltschieber 22d gebildet. Der Schaltschieber 22d weist einen stegförmigen Teilbereich 106d auf, der einen wesentlichen Teil des Schaltschiebers 22d bildet. Auf einer der Werkzeugaufnahme 12d zugewandten Seite des Schaltschiebers 22d weist dieser ein Ringelement 30d auf. Das Ringelement 30d ist teilkreisförmig ausgebildet und weist demnach eine Unterbrechung 132d auf. Die Unterbrechung 132d ist gegenüber einer Verbindungsstelle mit dem stegförmigen Teilbereich 106d angeordnet. Das Ringelement 30d ist zur formschlüssigen Verbindung des Schaltschiebers 22d mit der Werkzeugaufnahme 12d vorgesehen. Über das Ringelement 30d ist der Schaltschieber 22d formschlüssig mit der Werkzeugaufnahme 12d verbunden. Das Ringelement 30d erstreckt sich in einer Ebene senkrecht zu einer Haupterstreckungsrichtung 84d der Handwerkzeugmaschine 10d.

Die Werkzeugaufnahme 12d weist, entlang der Haupterstreckungsrichtung 84d der Handwerkzeugmaschine 10d betrachtet, auf einer einer Getriebeeinheit 92d zugewandten Seite zwei umlaufende Erhöhungen 108d, 134d auf, welche sich in Umfangsrichtung um eine Drehachse 26d erstrecken. In einem montierten Zustand der Handwerkzeugmaschine 10d ist das Ringelement 30d des Schaltschiebers 22d direkt zwischen den Erhöhungen 108d, 134d angeordnet und umschließt die Werkzeugaufnahme 12d. Zur Montage kann das Ringelement 30d aufgrund der Unterbrechung 132d einfach auf die Werkzeugaufnahme 12d geclipst werden.

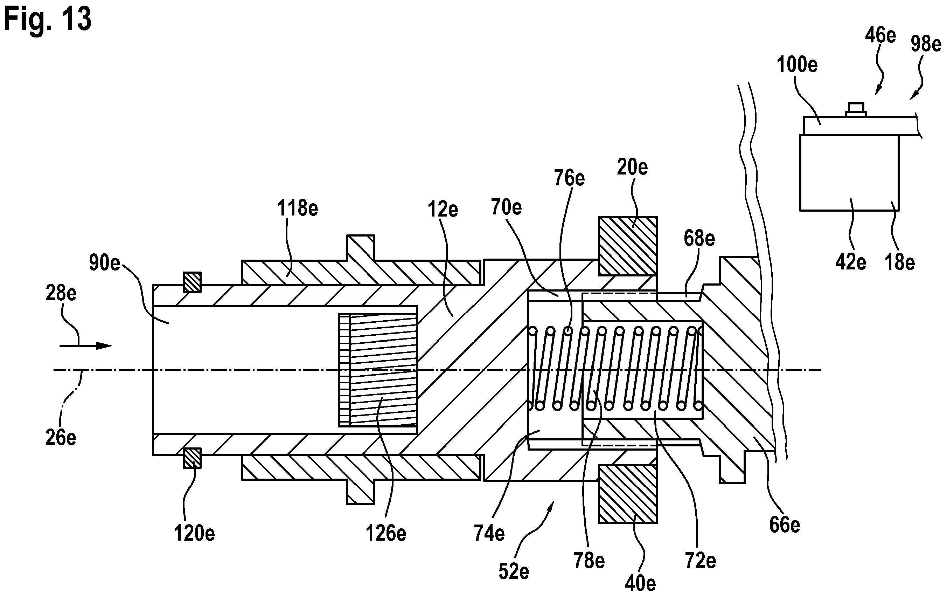

Figur 13 zeigt eine Werkzeugaufnahme 12e, eine Antriebsspindel 66e, ein mechanisches Schaltelement 20e und ein elektrisches Schaltelement 18e einer weiteren alternativen erfindungsgemäßen Handwerkzeugmaschine 10e. Das mechanische Schaltelement 20e ist von einem Magnetelement 40e gebildet. Das Magnetelement 40e ist von einem Dauermagnetring gebildet, der auf einer der Antriebsspindel 66e zugewandten Seite auf die Werkzeugaufnahme 12e aufgepresst ist. Das Magnetelement 40e ist zur Übertragung eines Schaltsignals auf das elektrische Schaltelement 18e über eine aktive Antriebseinheit 14e hinweg vorgesehen. Das elektrische Schaltelement 18e ist von einem Reed-Schalter 42e gebildet. Das elektrische Schaltelement 18e ist auf einer Leiterplatte 98e einer Aktivierungseinheit 46e angeordnet.

Nähert sich nun das Magnetelement 40e durch Druck auf die Werkzeugaufnahme 12e dem Reed-Schalter 42e an, bewegt sich das Magnetfeld des Magnetelements 40e auf den Reed-Schalter 42e zu. Durch die Annäherung des Magnetfelds bewegen sich zwei Kontaktelemente des Reed-Schalters 42e aufeinander zu bis sie sich berühren und einen Kontakt schließen.

Grundsätzlich wäre auch denkbar, dass das Magnetelement 40e einstückig mit einem Rücksetzelement 76e ausgebildet ist, das von zwei Magnetelementen gebildet ist und/oder einstückig mit einem Magnetelement 126e eines Bithalters 90e der Werkzeugaufnahme 12e ausgebildet ist.

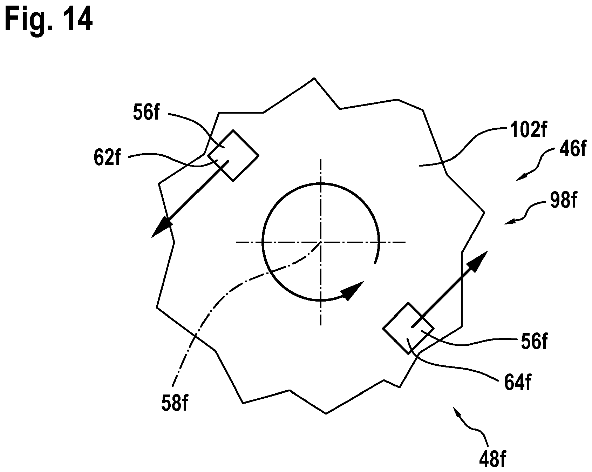

Figur 14 zeigt eine Sensoreinheit 56f einer weiteren alternativen erfindungsgemäßen Handwerkzeugmaschine 10f. Die Sensoreinheit 56f ist von zwei Beschleunigungssensoren 62f, 64f gebildet. Die Sensoreinheit 56f weist eine Messachse 58f auf, die koaxial zu einer Drehachse 26f einer Werkzeugaufnahme 12f ausgerichtet ist. Die Beschleunigungssensoren 62f, 64f sind auf einer Leiterplatte 98f einer Aktivierungseinheit 46f angeordnet. Die Beschleunigungssensoren 62f, 64f sind auf einem zweiten Teilbereich 102f der Leiterplatte 98f angeordnet. Die Beschleunigungssensoren 62f, 64f sind in der Art auf der Leiterplatte 98f angeordnet, dass sie einen identischen Abstand zu der Drehachse 26f der Werkzeugaufnahme 12f aufweisen. Die Beschleunigungssensoren 62f, 64f sind auf gegenüberliegenden Seiten der Drehachse 26f der Werkzeugaufnahme 12f angeordnet.

## Patentansprüche

1. Handwerkzeugmaschine, insbesondere Handwerkzeugschrauber, mit einer Werkzeugaufnahme (12a; 12b; 12c; 12d; 12e; 12f), mit einer Antriebsspindel (66a; 66b; 66c; 66d; 66e; 66f), mit zumindest einer aktiven Antriebseinheit (14a; 14b; 14c; 14d; 14e; 14f), zum Antrieb der Werkzeugaufnahme (12a; 12b; 12c; 12d; 12e; 12f) über die Antriebsspindel (66a; 66b; 66c; 66d; 66e; 66f), wobei die Werkzeugaufnahme (12a; 12b; 12c; 12d; 12e; 12f) und die Antriebsspindel (66a; 66b; 66c; 66d; 66e; 66f) getrennt voneinander ausgebildet und in Umfangsrichtung über eine Formschlussverbindung (52a; 52b; 52c; 52d; 52e; 52f) verbunden sind und wobei die Formschlussverbindung (52a; 52b; 52c; 52d; 52e; 52f) ein Umfangsspiel in Umfangsrichtung um eine Drehachse (26a; 26b; 26c; 26d; 26e; 26f) der Antriebsspindel (66a; 66b; 66c; 66d; 66e; 66f) und/oder der Werkzeugaufnahme (12a; 12b; 12c; 12d; 12e; 12f) aufweist, **gekennzeichnet durch** zumindest eine Erfassungseinheit (48a; 48b; 48c; 48d; 48e; 48f) zur Erfassung einer Kenngröße eines Umfangsspiels in Umfangsrichtung um eine Drehachse (26a; 26b; 26c; 26d; 26e; 26f) der Antriebsspindel (66a; 66b; 66c; 66d; 66e; 66f) und/oder der Werkzeugaufnahme (12a; 12b; 12c; 12d; 12e; 12f) zur Ermittlung einer Soll-Drehrichtung.

2. Handwerkzeugmaschine nach Anspruch 1, **dadurch gekennzeichnet, dass** die Formschlussverbindung (52a; 52b; 52d; 52e; 52f) von jeweils miteinander korrespondierenden Passverzahnungen (68a, 70a; 68b, 70b; 68d, 70d; 68e, 70e; 68f, 70f) gebildet ist.

3. Handwerkzeugmaschine nach Anspruch 2, **dadurch gekennzeichnet, dass** eine Passung der Passverzahnungen (68a, 70a; 68b, 70b; 68d, 70d; 68e, 70e; 68f, 70f) als Gleitsitz ausgeführt ist.

4. Handwerkzeugmaschine nach einem der vorhergehenden Ansprüche, **dadurch gekennzeichnet, dass** die Antriebsspindel (66a; 66b; 66c; 66d; 66e; 66f) und die Werkzeugaufnahme (12a; 12b; 12c; 12d; 12e; 12f) über die Formschlussverbindung (52a; 52b; 52c; 52d; 52e; 52f) zumindest begrenzt axial zueinander verschiebbar angeordnet sind.

5. Handwerkzeugmaschine nach einem der vorhergehenden Ansprüche, **dadurch gekennzeichnet dass** die Werkzeugaufnahme (12a; 12b; 12c; 12d; 12e; 12f) und/oder die Antriebsspindel (66a; 66b; 66c; 66d; 66e; 66f) im Bereich der Formschlussverbindung (52a; 52b; 52c; 52d; 52e; 52f) zumindest einen Aufnahmebereich (72a, 74a; 72b, 74b; 72c, 74c; 72d, 74d; 72e, 74e; 72f, 74f) zur Aufnahme eines Rücksetzelements (76a; 76b; 76c; 76d; 76e; 76f) aufweist und das Rücksetzelement (76a; 76b; 76c; 76d; 76e; 76f) dazu vorgesehen ist, die Werkzeugaufnahme (12a; 12b; 12c; 12d; 12e; 12f) gegenüber der Antriebsspindel (66a; 66b; 66c; 66d; 66e; 66f) in eine Grundstellung zu bewegen oder in dieser zu halten.

6. Handwerkzeugmaschine nach Anspruch 5, **gekennzeichnet durch** eine Gewichtskraft, welche kleiner/gleich einer Rückstellkraft des Rücksetzelements (76a; 76b; 76c; 76d; 76e; 76f) ist.

7. Handwerkzeugmaschine nach Anspruch 5 oder 6, **dadurch gekennzeichnet, dass** das Rücksetzelement (76a; 76c; 76d; 76e; 76f) von zumindest einer Schraubenfeder (78a; 78c; 78d; 78e; 78f) gebildet ist.

## Claims

1. Portable power tool, in particular portable power screwdriver, having a tool receptacle (12a; 12b; 12c; 12d; 12e; 12f), having a drive spindle (66a; 66b; 66c; 66d; 66e; 66f), having at least one active drive unit (14a; 14b; 14c; 14d; 14e; 14f) for driving the tool receptacle (12a; 12b; 12c; 12d; 12e; 12f) via the drive spindle (66a; 66b; 66c; 66d; 66e; 66f), wherein the tool receptacle (12a; 12b; 12c; 12d; 12e; 12f) and the drive spindle (66a; 66b; 66c; 66d; 66e; 66f) are formed separately from one another and are connected in the circumferential direction via a form-fitting connection (52a; 52b; 52c; 52d; 52e; 52f), and wherein the form-fitting connection (52a; 52b; 52c; 52d; 52e; 52f) exhibits circumferential play in the circumferential direction about an axis of rotation (26a; 26b; 26c; 26d; 26e; 26f) of the drive spindle (66a; 66b; 66c; 66d; 66e; 66f) and/or of the tool receptacle (12a; 12b; 12c; 12d; 12e; 12f), **characterized by** at least one acquisition unit (48a; 48b; 48c; 48d; 48e; 48f) for acquiring a characteristic quantity of a circumferential play in the circumferential direction about an axis of rotation (26a; 26b; 26c; 26d; 26e; 26f) of the drive spindle(66a; 66b; 66c; 66d; 66e; 66f) and/or of the tool receptacle (12a; 12b; 12c; 12d; 12e; 12f) in order to determine a desired direction of rotation.

2. Portable power tool according to Claim 1, **characterized in that** the form-fitting connection (52a; 52b; 52d; 52e; 52f) is formed by in each case mutually corresponding fitting tooth systems (68a, 70a; 68b, 70b; 68d, 70d; 68e, 70e; 68f, 70f).

3. Portable power tool according to Claim 2, **characterized in that** a fit of the fitting tooth systems (68a, 70a; 68b, 70b; 68d, 70d; 68e, 70e; 68f, 70f) is embodied as a sliding fit.

4. Portable power tool according to one of the preceding claims, **characterized in that** the drive spindle (66a; 66b; 66c; 66d; 66e; 66f) and the tool receptacle (12a; 12b; 12c; 12d; 12e; 12f) are arranged so as to be axially displaceable with respect to one another, at least to a limited extent, via the form-fitting connection (52a; 52b; 52c; 52d; 52e; 52f).

5. Portable power tool according to one of the preceding claims, **characterized in that,** in the region of the form-fitting connection (52a; 52b; 52c; 52d; 52e; 52f), the tool receptacle (12a; 12b; 12c; 12d; 12e; 12f) and/or the drive spindle (66a; 66b; 66c; 66d; 66e; 66f) has at least one receiving region (72a, 74a; 72b, 74b; 72c, 74c; 72d, 74d; 72e, 74e; 72f, 74f) for receiving a reset element (76a; 76b; 76c; 76d; 76e; 76f), and the reset element (76a; 76b; 76c; 76d; 76e; 76f) is provided to move the tool receptacle (12a; 12b; 12c; 12d; 12e; 12f) into an initial position with respect to the drive spindle (66a; 66b; 66c; 66d; 66e; 66f), or hold it therein.

6. Portable power tool according to Claim 5, **characterized by** a weight force that is less than/equal to a restoring force of the reset element (76a; 76b; 76c; 76d; 76e; 76f).

7. Portable power tool according to Claim 5 or 6, **characterized in that** the reset element (76a; 76c; 76d; 76e; 76f) is formed by at least one coil spring (78a; 78c; 78d; 78e; 78f).

## Revendications

1. Machine-outil à main, en particulier visseuse électrique portative, comprenant un porte-outil (12a ; 12b ; 12c ; 12d ; 12e ; 12f), une broche d'entraînement (66a ; 66b ; 66c ; 66d ; 66e ; 66f), au moins une unité d'entraînement active (14a ; 14b ; 14c ; 14d ; 14e ; 14f) pour l'entraînement du porte-outil (12a ; 12b ; 12c ; 12d ; 12e ; 12f) par le biais de la broche d'entraînement (66a ; 66b ; 66c ; 66d ; 66e ; 66f), le porte-outil (12a ; 12b ; 12c ; 12d ; 12e ; 12f) et la broche d'entraînement (66a ; 66b ; 66c ; 66d ; 66e ; 66f) étant réalisés séparément l'un de l'autre et étant reliés dans la direction périphérique par le biais d'une liaison par engagement par correspondance de formes (52a ; 52b ; 52c ; 52d ; 52e ; 52f) et la liaison par engagement par correspondance de formes (52a ; 52b ; 52c ; 52d ; 52e ; 52f) présentant un jeu périphérique dans la direction périphérique autour d'un axe de rotation (26a ; 26b ; 26c ; 26d ; 26e ; 26f) de la broche d'entraînement (66a ; 66b ; 66c ; 66d ; 66e ; 66f) et/ou du porte-outil (12a ; 12b ; 12c ; 12d ; 12e ; 12f), **caractérisée par** au moins une unité de détection (48a ; 48b ; 48c ; 48d ; 48e ; 48f) pour détecter une grandeur caractéristique d'un jeu périphérique dans la direction périphérique autour d'un axe de rotation (26a ; 26b ; 26c ; 26d ; 26e ; 26f) de la broche d'entraînement (66a ; 66b ; 66c ; 66d ; 66e ; 66f) et/ou du porte-outil (12a ; 12b ; 12c ; 12d ; 12e ; 12f) pour déterminer un sens de rotation de consigne.

2. Machine-outil à main selon la revendication 1, **caractérisée en ce que** la liaison par engagement par correspondance de formes (52a ; 52b ; 52d ; 52e ; 52f) est formée par des dentures d'ajustement (68a, 70a ; 68b, 70b ; 68d, 70d ; 68e, 70e ; 68f, 70f) se correspondant mutuellement à chaque fois.

3. Machine-outil à main selon la revendication 2, **caractérisée en ce qu'**un ajustement des dentures d'ajustement (68a, 70a ; 68b, 70b ; 68d, 70d ; 68e, 70e ; 68f, 70f) est réalisé sous forme de siège glissant.

4. Machine-outil à main selon l'une quelconque des revendications précédentes, **caractérisée en ce que** la broche d'entraînement (66a ; 66b ; 66c ; 66d ; 66e ; 66f) et le porte-outil (12a ; 12b ; 12c ; 12d ; 12e ; 12f) sont disposés de manière déplaçable axialement l'un par rapport à l'autre au moins de manière limitée par le biais de la liaison par engagement par correspondance de formes (52a ; 52b ; 52c ; 52d ; 52e ; 52f).

5. Machine-outil à main selon l'une quelconque des revendications précédentes, **caractérisée en ce que** le porte-outil (12a ; 12b ; 12c ; 12d ; 12e ; 12f) et/ou la broche d'entraînement (66a ; 66b ; 66c ; 66d ; 66e ; 66f) présentent, dans la région de la liaison par engagement par correspondance de formes (52a ; 52b ; 52c ; 52d ; 52e ; 52f), au moins une région de réception (72a, 74a ; 72b, 74b ; 72c, 74c ; 72d, 74d ; 72e, 74e ; 72f, 74f) pour recevoir un élément de réinitialisation (76a ; 76b ; 76c ; 76d ; 76e ; 76f) et l'élément de réinitialisation (76a ; 76b ; 76c ; 76d ; 76e ; 76f) étant prévu pour déplacer ou maintenir le porte-outil (12a ; 12b ; 12c ; 12d ; 12e ; 12f) par rapport à la broche d'entraînement (66a ; 66b ; 66c ; 66d ; 66e ; 66f) dans une position de base.

6. Machine-outil à main selon la revendication 5, **caractérisée par** une force de pesanteur qui est inférieure ou égale à une force de rappel de l'élément de réinitialisation (76a ; 76b ; 76c ; 76d ; 76e ; 76f) .

7. Machine-outil à main selon la revendication 5 ou 6, **caractérisée en ce que** l'élément de réinitialisation (76a ; 76c ; 76d ; 76e ; 76f) est formé par au moins un ressort hélicoïdal (78a ; 78c ; 78d ; 78e ; 78f).
